# EUROPÄISCHE PATENTSCHRIFT

(11) **EP 4 242 487 B1**
(45) Veröffentlichungstag und Bekanntmachung des Hinweises auf die Patenterteilung: **03.07.2024**
(21) Anmeldenummer: 23160658.3
(22) Anmeldetag: 08.03.2023
(51) Int. Cl.: F16G 1/28

(54) **TREIBRIEMEN**
TRANSMISSION BELT
COURROIE DE TRANSMISSION

(30) Priorität: 09.03.2022 DE 102022105552
(43) Veröffentlichungstag der Anmeldung: 13.09.2023
(73) Patentinhaber: Arntz Beteiligungs GmbH & Co. KG, 37671 Höxter (DE); Textilforschungsinstitut Thüringer-Vogtland e.V., 07973 Greiz (DE)
(72) Erfinder: Giner, Ignacio, 33104 Paderborn (DE); Bollmann, Samuel, 08491 Netzschkau (DE); Mishra, Pulkit, 07545 Gera (DE); Gambke, Annika, 07545 Gera (DE)
(74) Vertreter: Meissner Bolte Partnerschaft mbB

(56) Entgegenhaltungen:
- WO-A2-03/065856
- DE-A1-102005 051 888
- JP-A- 2003 096 292
- JP-A- 2012 021 628

## Beschreibung

Die Erfindung betrifft einen Treibriemen, insbesondere Keilriemen, Keilrippenriemen oder Zahnriemen auf elastomerer oder polyurethaner Basis mit Riemenrücken und mindestens einem Zugstrang, umfassend eine optisch detektierbare Belastungs- und Verschleißzustandsanzeige gemäß Oberbegriff des Anspruches 1.

Aus der EP 3 117 122 B1 ist ein Keilrippenriemen und ein Verfahren zur Anzeige eines Verschleißzustandes an einem Keilrippenriemen vorbekannt.

Gemäß der dortigen Aufgabenstellung soll der Verschleißzustand eines Keilrippenriemens auch im eingebauten Zustand überprüft werden können. Diesbezüglich wird ein Materialabtrag im Rippengrund als Kriterium für den Verschleißzustand detektiert.

Ein diesbezüglicher Keilrippenriemen umfasst einen Riemenrücken sowie einen unter dem Riemenrücken angeordneten Zugstrang und einen Unterbau, in dem in Längsrichtung des Keilrippenriemens zueinander parallel verlaufende und jeweils einen Zwischenraum zueinander aufweisende Keilrippen mit schrägen Rippenflanken ausgebildet sind.

Bei einem Materialabtrag am Unterbau wird ein erstes Material im Rippengrund freigelegt, während die Oberfläche der Rippenflanken weiterhin durch ein zweites Material gebildet ist. Der Materialabtrag im Rippengrund wird als Kriterium für den Verschleißzustand detektiert. Es gelingt in einfacher Weise, eine solche Detektion optisch vorzunehmen, indem die Oberfläche im Rippengrund durch ein Material gebildet und darunter ein optisch differenziertes Material angeordnet wird. Die optisch erkennbare Freilegung des optisch differierenden Materials dient als Kriterium für den Verschleißzustand.

Problematisch bei einer derartigen Lösung ist die Notwendigkeit, zwei unterschiedliche Materialien mit unterschiedlicher farblicher Eigenschaft in den Prozess der Herstellung derartiger Keilrippenriemen zu integrieren.

Außerdem können nur solche Verschleißzustände erkannt werden, die direkt oder indirekt auf einen Materialabtrag zurückzuführen sind.

Aus der EP 1 481 229 B1 ist es bekannt, ein thermochromes Material als Komponente eines Gummiproduktes, insbesondere eines Reifens, Gürtels oder Riemens einzusetzen. Das thermochrome Material dient als Indikator auf der Basis einer sichtbaren Farbveränderung dann, wenn ein bestimmter Temperaturbereich überschritten wurde. Hieraus wird auf eine verminderte Einsatzfähigkeit des entsprechenden Produktes geschlussfolgert und die Notwendigkeit eines Austausches angezeigt.

Aus der EP 0 597 923 B1 ist ein Seil bekannt, welches eine wärmeempfindliche Komponente aufweist, die einer sichtbaren Veränderung ihres Aussehens dann unterworfen ist, wenn sie einer ausgewählten erhöhten Temperatur ausgesetzt wurde, die aus einer Verformung oder Reibung in Verbindung mit einer Wärmefreisetzung der einzelnen Stränge des Seiles resultiert.

Bei dem Elastomerbauteil gemäß DE 10 2014 214 330 A1 und dem dort erläuterten Verfahren zur Überwachung der Betriebsfähigkeit eines Elastomerbauteiles soll erkannt werden, ob und inwieweit ein entsprechendes Elastomerbauteil seit seiner Inbetriebnahme thermisch beansprucht wurde.

Hieraus soll Schlussfolgerungen auf die noch zu erwartende Betriebsfähigkeitsdauer des Elastomerbauteiles gezogen werden können. Andere Beispiele sind in JP2003096292A und DE102005051888A1 offenbart.

Diesbezüglich weist das dort vorgestellte Elastomerbauteil mindestens einen, von außen sichtbaren bzw. optisch erfassbaren Bereich mit thermochromen Eigenschaften auf.

Dieser von außen optisch erfassbarer Bereich kann über eine zumindest bereichsweise unmittelbar auf die Oberfläche des Elastomerbauteiles aufgebrachte Beschichtung realisiert sein.

Alternativ kann das Elastomerbauteil zumindest abschnittsweise aus einem Werkstoff bestehen, welchem thermochrome Pigmente oder Füllstoffe beigefügt sind.

Die zur Realisierung der thermochromen Eigenschaften verwendeten Materialien werden in Abhängigkeit von den im jeweiligen Anwendungsfall auftretende Betriebstemperaturen gewählt. Insbesondere soll bei kritischen Temperaturen ein Farbwechsel des von außen sichtbaren Bereichs des Elastomerbauteiles erfolgen.

Demnach ist es also möglich, mittels einer visuellen Prüfung auf eine Schädigung des entsprechenden Bauteiles zu schließen, wodurch Aussagen zur restlichen Standzeit des Bauteiles ermöglicht werden.

Bei der Lösung gemäß DE 10 2014 214 330 A1 ist es demnach möglich, insbesondere auf Temperatureinflüssen beruhende Verschleißerscheinungen zeitnah zu erfassen. Das Beifügen von thermochromen Pigmenten oder Füllstoffen führt jedoch bei hochbelasteten Bauteilen aus elastomeren Werkstoffen zu einer Verschlechterung der Haltbarkeit und der mechanischen Eigenschaften eines entsprechenden Bauteiles.

Wird hingegen ein elastomeres Bauteil auf seiner Oberfläche beschichtet, bildet sich eine Strukturierung auf der Oberfläche aus, die für eine Vielzahl von Einsatzfällen nachteilig ist.

Würde man beispielsweise einen Treibriemen, insbesondere einen Keilriemen, auf seiner Riemenrückenseite mit einem thermochromen Material beschichten, dann führt dies zu Problemen hinsichtlich der sogenannten Rückenrollentauglichkeit. Außerdem würde eine derartige Schicht relativ schnell verschleißen.

Letztendlich wäre die Integration des Aufbringens oder Einbringens von thermochromen Materialien in einen Prozess, welcher mit einer temperaturgesteuerten Vulkanisation einhergeht, kontraproduktiv, da die Temperaturbehandlung im Herstellungsprozess bereits zu einer Veränderung der Eigenschaften der thermochromen Partikel oder Stoffe führt.

Aus dem Vorgenannten ist es daher Aufgabe der Erfindung, einen weiterentwickelten Treibriemen anzugeben, welcher mit einer optisch detektierbaren Belastungs- und Verschleißzustandsanzeige versehen ist, die wiederum keine nachteiligen Auswirkungen auf den eigentlichen Herstellungsprozess des Treibriemens hat und welche durch Vorfertigung so ausführbar ist, dass eine Berücksichtigung der ganz unterschiedlichen Temperaturverläufe bei entsprechenden Treibriemenprodukten möglich wird.

Die Lösung der Aufgabe der Erfindung erfolgt durch einen Treibriemen gemäß der Merkmalskombination nach Anspruch 1. Erfindungsgemäß wird bei einem Treibriemen, beispielweise riemenrückenseitig, mindestens über einen Riemenabschnitt ein Rücksprung ausgebildet.

Dieser Rücksprung kann bevorzugt im Herstellungsprozess, das heißt im Prozess des Vulkanisierens des Riemens ausgeführt werden.

Ein nachträgliches Einbringen von Ausnehmungen in den Riemen durch Materialabtrag, insbesondere im Riemenrücken, was zu einer Schwächung und zu möglichen Sollbruchstellen führt, ist daher nicht nötig.

Der Rücksprung dient nun der Aufnahme eines, auf die Abmessung des Rücksprunges angepassten, folienartigen oder textilen Gebildes, wobei das folienartige oder textile Gebilde mit irreversiblen thermochromen Pigmenten versehen, insbesondere beschichtet z. B. bedruckt oder getränkt ist, derart, dass bei einer vorgebbaren Temperaturbelastungsschwelle eine Farbänderung oder ein Farbumschlag erfolgt.

Beim Erreichen einer solchen thermischen Grenzbelastung kann also durch einfache visuelle Kontrolle festgestellt werden, dass ein bestimmter Verschleiß- oder Belastungszustand erreicht wurde. Im Nachgang kann entschieden werden, ob vorsorglich ein Ersatz eines diesbezüglichen Treibriemens erforderlich wird oder ob je nach Wartungszyklus ein Austausch erst bei einer Folgewartung erforderlich ist.

Wie bereits dargelegt, wird der Rücksprung als Kavität im Schritt der Riemenherstellung realisiert.

Das textile Gebilde besteht aus einem Vliesmaterial, einem Gewebe, einem Gewirke oder einem Gestrick. Als Folie kann ein thermoplastisches Material zum Einsatz kommen.

Das mit den irreversibel thermochromen Pigmenten versehene textile Gebilde oder die Folie wird stoffschlüssig im Rücksprung fixiert.

Zum einen kann hier ein bezogen auf die eingesetzten Materialien, insbesondere im Hinblick auf die Eigenschaften des Treibriemens, geeigneter Klebstoff eingesetzt werden.

Zum anderen sind auch stoffschlüssige Verbindungen wie Ultraschallschweißverbindungen oder Vibrationsreibschweißverbindungen möglich, wenn und insoweit Unverträglichkeiten hinsichtlich ansonsten erforderlicher Klebstoffe vorliegen.

In einer Weiterbildung der Erfindung ist der Rücksprung über den gesamten Riemenrückenlauf ausgebildet. In diesem Falle liegt das textile Gebilde oder die Folie als Band oder Faden vor und wird in den Rücksprung eingelegt und fixiert.

Das textile Gebilde oder die Folie kann mehrere Schichten oder Abschnitte mit thermochromen Pigmenten aufweisen, die jeweils bei unterschiedlichen Temperaturen einen Farbumschlag zeigen, so dass unterschiedliche Belastungszustände im Sinne einer Ampelfunktion darstellbar sind.

Ergänzend oder alternativ ist ein textiles Gebilde oder eine Folie mit irreversibel thermochromen Pigmenten in oder an mindestens einer Riemenflanke, einer Rippenflanke, am Rippengrund und/oder zahnseitig bei einem Zahnriemen vorgesehen.

Die irreversibel thermochromen Pigmente können in einer Farbbeschichtung bzw. einem Farbauftrag für das textile Gebilde enthalten sein.

Bei einer Ausführungsform der Erfindung weist das textile Gebilde oder die Folie auf seiner freien, sichtbaren Oberflächenseite eine Schicht auf, welche bevorzugt transparent ist und als Schutzschicht gegen Abrieb fungiert.

Das textile Gebilde oder die Folie kann mit seinen irreversibel thermochromen Pigmenten als pflasterähnliches, vorgefertigtes Produkt bereitgestellt werden.

Je nach dem temperaturseitigen Verhalten von Treibriemen unter Beachtung deren Materialeigenschaften, werden solche thermochromen Materialien und Pigmente ausgewählt, die im relevanten, kritischen Temperaturbereich zu einem unumkehrbaren Farbumschlag führen.

Das stoffschlüssige Verbinden der textilen Gebilde oder der Folie mit dem Treibriemen erfolgt unter Normaltemperatur, insbesondere bei Raumtemperatur. Ebenso erfolgt der Herstellungs- und Aufbereitungsprozess der textilen Gebilde oder Folie so, dass keine solchen Temperaturen vorliegen, die bereits zu einer Veränderung der Farbeigenschaften der Pigmente führen. Vorstehendes bezieht sich mindestens auf den Schritt des Aufbringens oder Einbringens der thermochromen Pigmente oder Stoffe.

Gemäß einem weiteren Erfindungsaspekt ist ein Gebilde geschaffen, welches aus einem Trägermaterial auf Vlies-, Gestrick-, Gewebe- oder Gewirke- oder Folienbasis besteht, wobei das Trägermaterial mit mindestens einer, irreversibel thermochrome Pigmente enthaltenden oder aus diesen Pigmenten bestehenden Beschichtung versehen ist.

Weiterhin besitzt das Gebilde eine Unterseite, die für eine stoffschlüssige Verbindung mit einem elastomeren Material, insbesondere einem Treibriemen geeignet ist. Darüber hinaus ist oberseitig eine optisch transparente Schutzschicht vorgesehen.

Das Gebilde wird bevorzugt als Streifen oder Band ausgeführt.

Die Unterseite kann mit einer Klebstoffbeschichtung versehen sein.

Zwischen der Klebstoffbeschichtung und dem Trägermaterial kann eine Trennschicht vorgesehen sein, um zu verhindern, dass es zu einer unerwünschten Reaktion zwischen den Inhaltstoffen der Kleberschicht und den thermochromen Pigmenten bzw. dem hierfür eingesetzten Material kommt.

Über die Wahl der Dicke des Trägermaterials ist ein temperaturseitiges Ansprechverhalten und damit der Zeitpunkt des Farbumschlages der Pigmente einstellbar.

Bei der Auswahl des Trägermaterials, aber auch der thermochromen Pigmente und der Anordnung bezüglich des Treibriemens ist sicherzustellen, dass ein möglichst gleichmäßiger Wärmeübergang vom Treibriemenmaterial auf das textile Gebilde erfolgt, so dass der Farbumschlag bei entsprechender Temperaturbelastung signifikant und zweifelsfrei stattfindet und entsprechend visuell erkennbar ist.

Erfindungsgemäß ist ergänzend die Verwendung des voranstehend erläuterten Gebildes als Sensor zur elektronikfreien, optischen Detektion erhöhter Temperaturen beim Einsatz von Treibriemen, wobei der Sensor dauerhaft mit dem jeweiligen Treibriemen verbunden ist.

Es hat sich in überraschender Weise gezeigt, dass eine Erfassung der Temperaturveränderung beim Einsatz eines Treibriemens im Bereich des Riemenrückens ausreicht, um bestimmte Belastungsfälle und Belastungsgrenzen zu erkennen, obwohl die Temperaturerhöhung an Riemenflanken bei Keilriemen im Vergleich zur Temperatur auf dem Riemenrücken größer ist. Durch die Ausbildung des Rücksprunges bzw. der Kavität auf dem Riemenrücken anstelle einer Anordnung auf den Riemenflanken kommt es zu keiner Reduzierung der Tragfähigkeit der Riemen und zu keinen Einschränkungen hinsichtlich deren Einsatzbereich.

Die Erfindung soll nachstehend anhand eines Ausführungsbeispieles näher erläutert werden.

Bezüglich der Herstellung eines Rücksprunges für einen Treibriemen, insbesondere einen Keilriemen, wird bei flankenoffenen Keilriemen ein Formkörper, zum Beispiel in Form eines metallischen Blechstreifens direkt auf eine Festtrommel fixiert. Hier handelt es sich um eine übliche Konfektionstrommel, auf der das Riemenmaterial schrittweise konfektioniert wird.

Der Formkörper kann mit einem entsprechenden Trennmittel behandelt bzw. umgeben werden.

Der eingesetzte Formkörper liegt dann quer über die Trommel und es folgt eine Umwicklung der Trommel. Nach abgeschlossener Vulkanisation wird der Formkörper vom Wickel entformt.

Die Herstellung des beispielhaften textilen Gebildes als elektronikfreier Temperatursensor greift auf ein Textilgewirke und Vliesmaterialien zurück.

Der Vorteil des Einsatzes von Vliesmaterialien liegt darin, dass diese eine gute Aufnahme und Durchdringung mit entsprechenden thermochromen Pigmenten und Farben aufweisen.

Über die Wahl der eingesetzten Substratmaterialien bezüglich der thermochromen Pigmente ist eine Verzögerung des Farbumschlages möglich, da eine längere Zeitdauer erforderlich ist, bis diese auf die Temperatur des Treibriemens gebracht sind.

Irreversibel thermochrome Pigmente oder Farben sind am Markt verfügbar. Eingesetzt wurden hier Pigmente mit einer Umschlagstemperatur von 100°C bzw. 120°C mit einem Farbumschlag farblos/weißlich zu Magenta. Eine entsprechende Farbe lag als wasserbasierte Tinte vor.

Bei der Auswahl der thermochromen Materialien ist dafür Sorge zu tragen, dass ein Farbumschlag unter allen Umständen irreversibel ist und nicht durch Umwelteinflüsse, wie zum Beispiel Luftfeuchtigkeit, ein reversibles Verhalten vorliegt.

Unterseitig kann das textile Ausgangsmaterial mit einer Beschichtung, insbesondere Polyurethanbeschichtung, versehen sein, um quasi eine Sperrschicht zu einem darunterliegenden Klebermaterial zu bilden, wodurch eine nachteilige Beeinflussung der Eigenschaften der thermochromen Komponente bzw. Farbe ausgeschlossen wird.

Auf der Oberseite des textilen Gebildes kann eine Schutzschicht in Form einer beispielhaften Acrylharzlackschicht aufgebracht werden. Diese Schutzschicht verhindert einen unerwünschten Abrieb der thermochromen Farbe.

Als Klebstoff zur Ausführung einer Klebeverbindung, das heißt einer besonderen Art einer stoffschlüssigen Verbindungstechnologie, wurde beispielhaft 3M Scotch-Weld Cyanacrylat-Klebstoff in flüssiger oder gelartiger Form eingesetzt.

Es hat sich gezeigt, dass gelartigen Klebstoffen der Vorzug zu geben ist. Die Auswahl des Klebstoffmaterials erfolgt im Hinblick auf das Grundmaterial des Treibriemens, zum Beispiel einem EPDM-Kautschuk.

Um die Haftungseigenschaften bezogen auf die Kavität im Treibriemen zu verbessern, können Haftvermittler eingesetzt werden oder es kann eine physikalische Oberflächenbehandlung stattfinden.

Der Auftrag der thermochromen Pigmente bzw. einer dementsprechenden Farbe kann mittels Rakel im Siebdruckverfahren direkt auf das Textilsubstrat erfolgen. Durch eine Lufttrocknung ohne erhöhte Temperatur wird ein unerwünschter Farbumschlag vermieden.

Selbstverständlich sind auch Techniken wie ein Digitaldruck zur Farbapplikation auf den Textilsubstraten denkbar.

Die angesprochene Schutzschicht auf der Oberseite, welche eine Deckschicht bildet, erfolgt beispielsweise mittels eines Sprühprozesses. Auch hier ist wichtig, dass beim Trocknen oder Aushärten der Schutzschicht keine Wärme entsteht bzw. keine Wärmeanwendung erforderlich ist.

Das derart funktionalisierte und ausgerüstete Textilsubstrat wird im Hinblick auf die Abmessungen des Rücksprunges bzw. der Kavitäten im Treibriemen zugeschnitten, insbesondere ausgestanzt. Bei einer stoffschlüssigen Verbindung mittels Kleber wird selbiger, bevorzugt nach einem Oberflächenreinigungsprozess, unmittelbar in dem Bereich der Kavität oder auf der Unterseite des flexiblen Trägers aufgetragen. Ein Auftrag in einer dünnen Schicht verhindert die Wahrscheinlichkeit unerwünschter Farbumschlagsreaktionen aufgrund der chemischen Eigenschaften des Klebers.

PES-Textilgewirke und PES-Vliese zeigten besonders vorteilhafte Eigenschaften bei deren Verwendung als Ausgangsmaterial für das funktionalisierte Gebilde.

Beispielhaft eingesetzte thermochrome Farben zeigten bereits bei einer Temperatureinwirkung im Bereich ab 90°C eine deutliche, irreversible Farbänderung von Weiß in Magenta.

## Patentansprüche

1. Treibriemen, nämlich Keilriemen, Keilrippenriemen oder Zahnriemen auf elastomerer oder polyurethaner Basis mit Riemenrücken und mindestens einem Zugstrang, umfassend eine optisch detektierbare Belastungs- und Verschleißzustandsanzeige,
wobei am Riemen über einen Riemenabschnitt ein Rücksprung in Form einer Kavität ausgebildet ist, welcher einen auf die Abmessungen des Rücksprunges angepassten flächigen, flexiblen Träger aufnimmt, **dadurch gekennzeichnet, dass** der Träger mit irreversibel thermochromen Pigmenten oder einer Schicht die irreversibel thermochromen Pigmenten enthält, versehen ist, derart, dass bei einer vorgebbaren Temperaturbelastungsschwelle des Riemens eine irreversible Farbänderung oder ein irreversibler Farbumschlag erfolgt.

2. Treibriemen nach Anspruch 1,
**dadurch gekennzeichnet, dass**
riemenrückenseitig über einen Riemenabschnitt der Rücksprung ausgebildet ist, welcher ein textiles Gebilde oder eine Folie als Träger aufnimmt, wobei das textile Gebilde oder die Folie mit irreversibel thermochromen Pigmenten versehen, nämlich beschichtet, bedruckt oder getränkt ist, derart, dass bei der vorgebbaren Temperaturbelastungsschwelle eine Farbänderung oder ein Farbumschlag erfolgt.

3. Treibriemen nach Anspruch 1 oder 2,
**dadurch gekennzeichnet, dass**
die Kavität im Schritt der Riemenherstellung realisiert ist.

4. Treibriemen nach Anspruch 2 ,
**dadurch gekennzeichnet, dass**
das textile Gebilde aus einem Vliesmaterial, einem Gewebe, einem Gewirke oder einem Gestrick oder Gemischen hieraus besteht.

5. Treibriemen nach einem der Ansprüche 2 bis 4,
**dadurch gekennzeichnet, dass**
das textile Gebilde oder die Folie stoffschlüssig im Rücksprung fixiert ist.

6. Treibriemen nach einem der vorangegangenen Ansprüche,
**dadurch gekennzeichnet, dass**
der Träger, das textile Gebilde oder die Folie mehrere Schichten oder Abschnitte mit thermochromen Pigmenten aufweist, die jeweils bei unterschiedlichen Temperaturen einen Farbumschlag zeigen, so dass unterschiedliche Belastungszustände im Sinne einer Ampelfunktion darstellbar sind.

7. Treibriemen nach einem der Ansprüche 2 bis 6,
**dadurch gekennzeichnet, dass**
das textile Gebilde oder die Folie als Träger mit irreversibel thermochromen Pigmenten ergänzend in oder an einer Riemenflanke, am Rippengrund oder zahnseitig bei einem Zahnriemenvorgesehen ist.

8. Treibriemen nach einem der vorangegangenen Ansprüche,
**dadurch gekennzeichnet, dass**
die irreversibel thermochromen Pigmente als Farbbeschichtung aufgetragen sind.

9. Treibriemen nach einem der vorangegangenen Ansprüche,
**dadurch gekennzeichnet, dass**
der Träger auf seiner freien, sichtbaren Oberflächenseite mit einer Abriebsschutzschicht, versehen ist.

10. Treibriemen nach einem der vorangegangenen Ansprüche,
**dadurch gekennzeichnet, dass**
der Träger mit seinen irreversibel thermochromen Pigmenten als pflasterähnliches, vorgefertigtes Produkt bereitgestellt ist.

## Claims

1. Transmission belt, namely a V-belt, V-ribbed belt or toothed belt on an elastomeric or polyurethane basis with a belt backing and at least one tension member, comprising an optically detectable load and wear condition indicator, wherein a recess in the form of a cavity is formed on the belt over a belt portion, which recess accommodates a flat, flexible carrier adapted to the dimensions of the recess,
**characterized in that**
the carrier is provided with irreversibly thermochromic pigments or a layer containing irreversibly thermochromic pigments in such a way that a layer containing irreversibly thermochromic pigments is formed on the belt, **characterized in that** the carrier is provided with irreversibly thermochromic pigments or a layer containing irreversibly thermochromic pigments in such a way that an irreversible color change or an irreversible color conversion takes place at a predeterminable temperature load threshold of the belt.

2. Transmission belt according to claim 1,
**characterized in that**
the recess is formed on the rear side of the belt over a belt section, which recess accommodates a textile structure or a film as a carrier, wherein the textile structure or the film is provided with irreversibly thermochromic pigments, namely coated, printed or impregnated, in such a way that a color change or color conversion takes place at the predeterminable temperature load threshold.

3. Transmission belt according to claim 1 or 2,
**characterized in that**
the cavity is realized in the belt manufacturing step.

4. Transmission belt according to claim 2,
**characterized in that**
the textile structure consists of a nonwoven material, a woven fabric, a stitch bonded fabric or a knitted fabric or mixtures thereof.

5. Transmission belt according to one of claims 2 to 4,
**characterized in that**
the textile structure or the film is fixed in the recess in a materially bonded manner.

6. Transmission belt according to one of the preceding claims,
**characterized in that**
the carrier, the textile structure or the film has a plurality of layers or sections with thermochromic pigments, each of which shows a color conversion at different temperatures, so that different load states can be represented in the sense of a traffic light function.

7. Transmission belt according to one of claims 2 to 6,
**characterized in that**
the textile structure or the film as a carrier with irreversibly thermochromic pigments is additionally provided in or on a belt flank, on the rib base or on the tooth side of a toothed belt.

8. Transmission belt according to one of the preceding claims,
**characterized in that**
the irreversibly thermochromic pigments are applied as a colored coating.

9. Transmission belt according to one of the preceding claims,
**characterized in that**
the carrier is provided with an abrasion protection layer on its free, visible surface side.

10. Transmission belt according to one of the preceding claims,
**characterized in that**
the carrier with its irreversibly thermochromic pigments is provided as a plaster-like, prefabricated product.

## Revendications

1. Courroie de transmission, à savoir courroie trapézoïdale, courroie trapézoïdale à nervures ou courroie dentée, à base d'élastomère ou de polyuréthane, pourvue d'un dos de courroie et d'au moins un brin de traction, comprenant un indicateur de charge et d'état d'usure détectable par voie optique,
dans laquelle
un retrait sous la forme d'une cavité est formé sur la courroie, qui s'étend sur une partie de la courroie et qui reçoit un support plat et flexible, adapté aux dimensions du retrait,
**caractérisée en ce que**
le support est pourvu de pigments thermochromiques irréversibles ou d'une couche comprenant des pigments thermochromiques irréversibles, de telle sorte qu'un changement de couleur irréversible ou une variation de couleur irréversible se produit à un seuil de charge thermique prédéfinissable de la courroie.

2. Courroie de transmission selon la revendication 1,
**caractérisée en ce que**
le retrait est formé du côté dos de courroie sur une partie de la courroie et reçoit une structure textile ou une feuille comme support, la structure textile ou la feuille étant pourvue, en particulier revêtue, imprimée ou imprégnée, de pigments thermochromiques irréversibles, de telle sorte qu'il se produit un changement de couleur ou une variation de couleur au seuil de charge thermique prédéfinissable.

3. Courroie de transmission selon la revendication 1 ou 2,
**caractérisée en ce que**
la cavité est réalisée dans l'étape de fabrication de la courroie.

4. Courroie de transmission selon la revendication 2,
**caractérisée en ce que**
la structure textile est constituée d'un matériau non tissé, d'un tissu, d'un maillage ou d'un tricot ou de mélanges de ceux-ci.

5. Courroie de transmission selon l'une des revendications 2 à 4,
**caractérisée en ce que**
la structure textile ou la feuille est fixée par coopération de matière dans le retrait.

6. Courroie de transmission selon l'une des revendications précédentes,
**caractérisée en ce que**
le support, la structure textile ou la feuille présente(nt) plusieurs couches ou parties ayant des pigments thermochromiques, qui montrent respectivement une variation de couleur à différentes températures, de manière à permettre de représenter différents états de charge dans le sens d'une fonction de feu de signalisation.

7. Courroie de transmission selon l'une des revendications 2 à 6,
**caractérisée en ce que**
la structure textile ou la feuille comme support ayant des pigments thermochromiques irréversibles est prévue en supplément dans ou sur un flanc de la courroie, au fond de la nervure ou du côté des dents dans le cas d'une courroie dentée.

8. Courroie de transmission selon l'une des revendications précédentes,
**caractérisée en ce que**
les pigments thermochromiques irréversibles sont appliqués sous forme de revêtement coloré.

9. Courroie de transmission selon l'une des revendications précédentes,
**caractérisée en ce que**
le support est pourvu d'une couche de protection contre l'abrasion sur le côté de sa surface libre et visible.

10. Courroie de transmission selon l'une des revendications précédentes,
**caractérisée en ce que**
le support ayant ses pigments thermochromiques irréversibles est fourni sous la forme d'un produit préfabriqué semblable à un pansement.
